# EUROPEAN PATENT APPLICATION

(11) **EP 2 158 815 A1**
(43) Date of publication of application: **03.03.2010**
(21) Application number: 07828149.0
(22) Date of filing: 27.06.2007
(51) Int. Cl.: A23C 20/00

(54) **CHEESE-LIKE FOOD OBTAINED FROM FERMENTED SOYMILK AND PROCESS FOR PRODUCING THE SAME**

(71) Applicant: Nichi Nichi Pharmaceutical CO., LTD., 239-1 Tominaga Iga-shi Mie 518-1417 (JP); Furumai, Tamotsu, 25-25 Sasanodai 3-chome Asahi-ku Yokohama-shi Kanagawa 241-0816 (JP); Yoshida, Ryuji, 146 Akakura Oyabe-shi Toyama 932-0814 (JP)
(72) Inventor: FURUMAI, Tamotsu, Kanagawa 241-0816 (JP); YOSHIDA, Ryuji, Toyama 932-0814 (JP); HAYASHI, Atsushi, Mie 518-1417 (JP); OBAYASHI, Akira, Mie 518-1417 (JP); SHIMADA, Takashi, Mie 518-1417 (JP)
(74) Representative: HOFFMANN EITLE
(86) International application number: PCT/JP2007/062844
(87) International publication number: WO 2009/001443

(57) **Abstract**

An object of the present invention is to solve the problems of the conventional cheese-like foods prepared by using soymilk and production method thereof, such as necessity for soymilk in a special composition with its oils and sugars removed and elongation of the production period until completion for aging by molding. The present invention relates to a method of producing a cheese-like food, comprising the steps of preparing a curd by fermenting soymilk with a lactic bacterium having protease activity, heating the curd, and filtering the curd.

## Description

### Technical Field

The present invention relates to a cheese-like food produced by fermenting soymilk by using a characteristic lactic bacterium and a production method thereof, and the cheese-like food provides those who are allergic to dairy products with a new, safe and assured foodstuff.

### Background Art

Recent health trend in essence focuses on mainly how to have healthy food products for three meals. In the trend, soybean is attracting attention as a low-calorie protein source. Because soybean proteins are reported to have cholesterol-lowering action and isoflavones are reported to have female hormone-like action, soybean is attracting attention also as a functional food. Soybean-based foods include traditional foods such as tofu (soybean curd), natto (fermented soybeans) and miso (salted fermented soybean paste), as well as health foods such as soymilk and soybean proteins, and thus various products have been developed from soybean.

It is known that soymilk-based cheese-like foods are produced by a method of fungal fermentation of a curd obtained by fermentation of soyinilk with a heat-resistant lactic bacterium (Patent Literatures 1 and 2). However, the method requires fungal fermentation, which disadvantageously causes problems such as complicated operation, elongation of the production period and increase in production cost.

It is also known that an alternative method is to produce a cheese-like food by adding fats and oils, amino acids, and sugars to soybean protein extracted from soybean and fermenting it and processing the fermented product (Patent Literature 3). However, the method requires the step of extracting only the protein and additionally the step of adding particular fats and oils and sugars, which causes a disadvantage of complicated operation.

Although dairy products are rich in nutrition, there are actually an increasing number of people, irrespective of age or sex, who show allergic symptoms to dairy product-containing foods and cannot eat these foods. Development of a soymilk cheese-like food that overcomes the problems above and service of cakes and cuisines prepared by using the same would be undoubtedly good news to those who show allergic symptoms.
Patent Literature 1: JP-B No. 57-3338 (1982)
Patent Literature 2: JP-A No. 59-213358 (1984)
Patent Literature 3: JP-B No. 3-224448 (1991)

### Summary of Invention

### Problems to be Solved by Invention

An object of the present invention is to solve the problems described above of the conventional cheese-like foods produced by using soymilk and production method thereof, such as necessity during curd production for soymilk in a special composition with its oils and sugars removed and elongation of the production period until completion caused by aging by fungal fermentation.

### Means for Solving the Problems

The present inventors have found that a lactic bacterium having protease activity, especially gelatinase activity, can solidify soymilk and a curd obtained by heating the fermented soymilk has process cheese-like elasticity and taste, even if prepared without aging by molding (fungal fermentation), and thus completed the present invention.

Accordingly, the present invention has the following aspects:
(1) a method of producing a cheese-like food, comprising the steps of preparing a curd by fermenting soymilk with a lactic bacterium having protease activity, heating the curd, and filtering the curd;
(2) the production method according to (1) above, wherein the protease is gelatinase;
(3) the production method according (1) or (2) above, wherein the lactic bacterium is an Enterococcus faecalis;
(4) the production method according to any one of (1) to (3) above, wherein the lactic bacterium is Enterococcus faecalis TN-9 (FERM BP-10838) or a mutant strain thereof;
(5) a cheese-like food, obtainable by the production method according to any one of (1) to (4) above; and
(6) Lactic bacterium Enterococcus faecalis TN-9 (FERM BP-10838).

### Effects of Invention

It is possible by the production method according to the present invention to produce a cheese-like food in simple steps of fermentation, heating and filtration in a shortened period of time without use of special soymilk or without long-term aging by moulding. In addition, the cheese-like food obtained by the production method according to the present invention is superior in taste and delicious. Moreover, it provides a new foodstuff, as well as safe and assured cakes and cuisines, for those who show allergic symptoms to dairy products and thus cannot eat these products, thereby enriching their dietary life.

### Best Mode for Carrying out the Invention

The soymilk for use in the present invention is not particularly limited, if it is non-modified soymilk. The non-modified soymilk means soymilk containing only water and bean without any added seasoning. Examples of the beans include soybean, black soybean, adzuki bean, chickpea, lentil, kidney bean and the like, and soybean is preferable. The non-modified soymilk is readily obtained, as it can be prepared by a known method and is also commercially available. The soymilk has a bean solid matter content preferably of 8% or more, particularly preferably of 10% or more. This is because high bean solid matter content makes it easier to produce curd.

The lactic bacterium according to the present invention has protease activity. It is preferable that the protease activity of the lactic bacteria is higher, in terms of soymilk solidification.

Because the lactic bacterium for use in the present invention decomposes proteins into tasty amino acids or peptides by its secreted protease, it is possible to obtain a tasty cheese-like food with no unpleasant soymilk odor without aging by molding. In addition, destruction of micelles in the soymilk by the protease facilitates solidification, and in combination with the influence of the organic acid produced by the lactic bacteria gives an elastic soymilk coagulum.

The lactic bacterium according to the present invention is preferably a lactic bacterium producing protease, belonging to the genus Enterococcus. The lactic bacterium is desirably Enterococcus faecalis having protease activity and more desirably, for example, Enterococcus faecalis TN-9 isolated from the deep ocean water in the Toyama Bay. Enterococcus faecalis TN-9 was deposited to the NITE Patent Microorganisms Depository on April, 24, 2007 with the Accession Number of FERM BP-10838.

The protease according to the present invention is particularly preferably gelatinase. Lactic bacteria belonging to the genus Enterococcus are known to liquefy gelatin, but not all strains liquefy gelatin. The gelatin-liquefying strains produce a protease, which liquefies gelatin by degradation. In particular, there are gelatinase-producing strains in Enterococcus faecalis, and the strains had been classified as Enterococcus faecalis sp. liquefasience in the past. Enterococcus faecalis TN-9 has gelatinase activity.

The soymilk is fermented by inoculating with a lactic bacteria culture solution previously cultured with food raw materials in a suitable amount, for example 2 to 5 vol% with respect to the soymilk, and fermenting the resulting solution at a temperature of 20 to 40°C, preferably approximately 30°C, for 3 to 50 hours, preferably 6 to 25 hours and particularly preferably for approximately 18 hours. The soymilk solidifies by fermentation {hereinafter, the solidified product will be referred to as "curd"). No additive other than the lactic bacterium or the lactic bacterium culture solution, such as glucose as common carbon source, is needed during fermentation of soymilk. Because the lactic bacteria belonging to the genus Enterococcus have salt resistance, salt may be added at a concentration of 1 to 5% for adjustment of the taste.

The curd thus obtained is heated, for example in hot water, at a temperature in the range of 50 to 70°C for about 3 minutes to 1 hour. The curd further solidifies by heating, giving processed cheese-like elasticity. Heating at a temperature in the range of 50 to 60°C allows preservation of the lactic bacterium without killing or the protease without inactivation.

The solid matter is collected by filtration of the curd after heating. The filtration of curd can be carried out by a common method. The curd may be filtered, for example, by using a steam-sterilized or boiling water-disinfected finely-woven cloth, such as cotton cloth or sake-filtering cloth. The curd solid matter collected by the filtration method above is dehydrated under pressure. The pressure applied during dehydration is a pressure leaving the curd solid matter uncrushed, and, for example, the curd is placed, as it is wrapped in cloth, under a weight stone at a pressure adjusted to 3 to 10 kg/cm² and left at 4°C for 12 to 24 hours. A flat board such as cutting board is then favorably placed between the cloth-wrapped curd and the weight stone, for uniformization of the pressure. In addition, a moisture-absorbing material, such as paper towel, or a punctured vat allowing water drainage is favorably placed under the cloth-wrapped curd for removal of the water squeezed out. The water content of the curd solid matter at this point in time is 70 to 40 wt%, desirably 60 to 40 wt%. In case of a cheese-like food as a foodstuff, the water content of the curd solid matter is 90 to 40 wt%, preferably 80 to 40 wt%.

After water is removed by filtration and a curd solid matter with sufficient hardness is obtained, a cheese-like food can be obtained by rubbing salt into the surface in an amount of approximately 3 to 5% with respect to the weight of the curd solid matter.

Alternatively, the cheese-like food as a foodstuff for cake and cuisines can be prepared from the heat-treated curd, without addition of salt on the curd solid matter obtained after filtration by the method above.

### Example 1

### Isolation and identification of lactic bacteria

### (1) Isolation

Deep ocean water at the depth of approximately 250 meter was collected in deep ocean water-withdrawing facilities at two places in Toyama Prefecture (Namerikawa-shi and Nyuzen-machi) and microorganism in the deep ocean water were collected by filtration thereof through a filter having a pore size of 0.2 micrometer. The filter was placed on a flat agar plate of a common lactic bacteria growth medium and cultured, to give 265 colonies on the filter, and 29 strains producing acid among the colonies as candidate lactic bacteria were subjected to a catalase test. 25 strains were catalase-negative, and all 25 catalase-negative strains were gram-positive bacteria. 24 strains in the 25 strains were cocci, and one strain was bacillus. The 25 strains had properties satisfying the definition of lactic bacteria and were thus identified as lactic bacteria.

### (2) Determination of the genus and species of isolated lactic bacteria

The genus and species of the 24 coccal strains in the 25 lactic bacteria strains selected were identified by using a commercially available identification kit (Api20 Strep (BioMerieux Japan)). The results are summarized in Table 1.

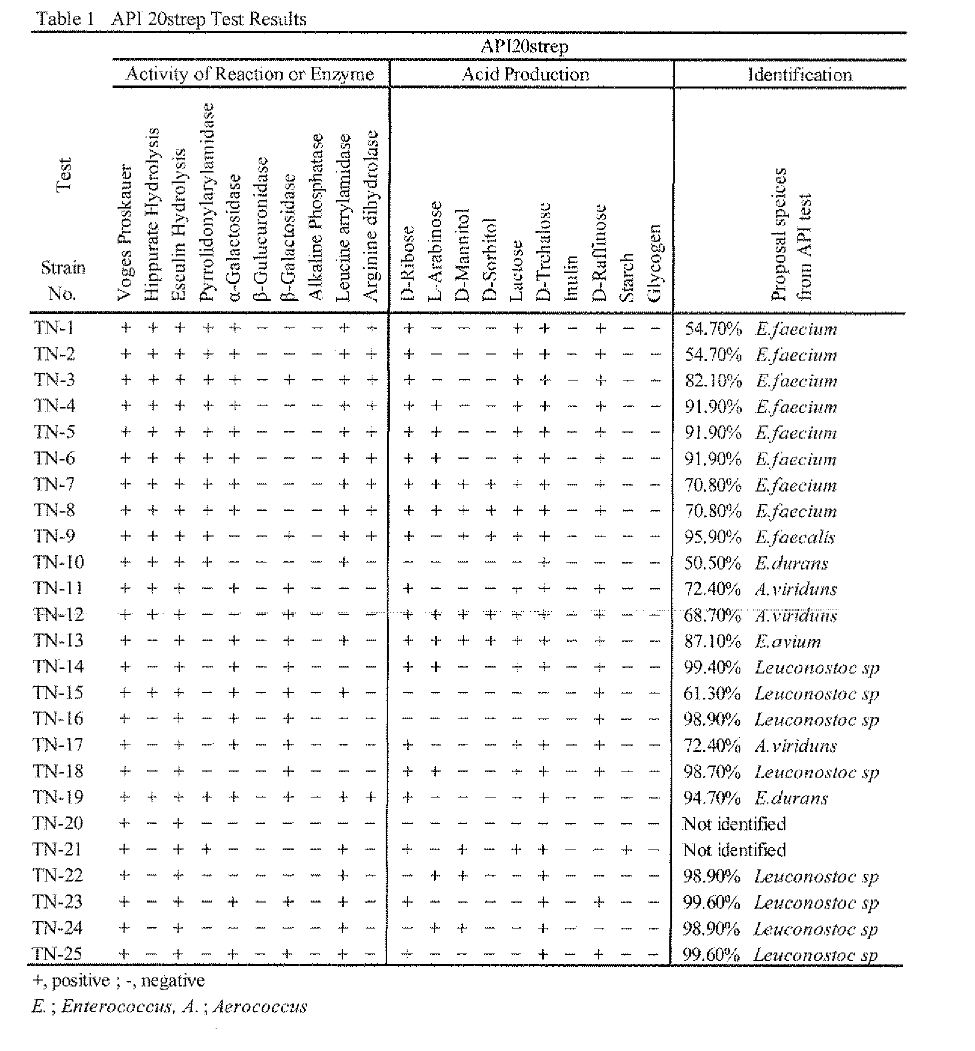

### (3) Character on taxonomy of Enterococcus faecalis TN-9

| | | | |
|---|---|---|---|
| Cell morphology | | | |
| | Gram stain | | + |
| | Coccal | | sometimes diplococcal, streptococcal |
| | Mobility | | - |
| | Endospore | | - |
| | | | |
| Physiologic property | | | |
| | Litmus milk | | acid, decoloration, coagulation within 24 hours, liquefaction after about 48 hours |
| | Gelatin liquefaction | | + |
| | Catalase | | - |
| | VP test | | + |
| | Production of acid from sugar | | |
| | | L-Arabinose | - |
| | | D-Xylose | - |
| | | D-Glucose | + |
| | | D-Mannose | + |
| | | D-Fructose | + |
| | | D-Galactose | + |
| | | Maltose | + |
| | | Sucrose | + |
| | | Lactose | + |
| | | Trehalose | + |
| | | D-Sorbitol | + |
| | | D-Mannitol | + |
| | | Inositol | ± |
| | | Glycerin | + |
| | | Starch | - |
| | Production of gas from sugar | | |
| | | D-Glucose | - |
| | | D-Mannose | - |
| | | D-Fructose | - |
| | | D-Galactose | - |
| | | Maltose | - |
| | | Sucrose | - |
| | | Lactose | - |
| | | Trehalose | - |
| | | D-Sorbitol | - |
| | | D-Mannitol | - |
| | | Inositol | - |
| | | Glycerin | - |
| | Response to oxgen | | facultatively anaerobic |
| | Range of growth temperature | | 16.5°C∼46.9°C |
| | Esculin decomposition | | + |
| | Hippurate decomposition | | + |
| | Hemolysis pattern | | γ |
| | Resistance to NaCl | | 6.5% |
| | Phosphatase | | Alkaline Phosphatase( - ) |

### -Homology based on 16S rDNA base sequence

The base sequence of 16S rDNA of the TN-9 strain having a length of 1400 bp or more was determined and subjected to homology search with DNA database (NCBI), showing a homology of 99.7% with Enterococcus faecalis V583.

### - Classification/identification

The TN-9 strain belongs to Streptococcaceae, based on its taxonomic properties. Analysis with a streptococcal identification kit showed that the strain was Enterococcus faecalis at an identification accuracy of 95.9%. In addition, the homology based on the 16S rDNA base sequence showed that the strain had the highest homology with Enterococcus faecalis, and thus the strain was identified as Enterococcus faecalis.

### Example 2

### Preparation of cheese-like food

Enterococcus faecalis TN-9 previously cultured in a liquid medium containing 2.5% glucose, 0.77% yeast extract and 1.4% soybean protein at 30°C for 18 hours was used as seed strain. 2 vol% TN-9 culture solution was inoculated into commercially available non-modified soymilk (a product having the label of a soybean protein content of 10% or more), and the mixture was fermented at 30°C for 18 hours. The soymilk after fermentation was heated in hot water at 60°C for 5 minutes. The solid matter generated by heating was filtered through a steam-sterilized cotton cloth and pressed gradually under weight for removal of the water (water content of the solid matter in this case: 60 wt%). One liter of soymilk gave approximately 150 g of curd solid matter. The curd solid matter was reshaped properly, wrapped in a new steam-sterilized cotton cloth, and left for aging and stabilization in a vat with a paper towel placed thereon, in a refrigerator at 4°C for 24 hours. After the curd is hardened sufficiently, salt was rubbed into the surface in an amount of 3% with respect to the weight of the curd solid matter, and the resulting product was stored in a refrigerator at 4°C for 24 before tasting.
The tasting was performed by four males and three females. Seven out of seven examiners answered that the curd had process cheese-like taste and was delicious. Even a male who said that he dislike soymilk evaluated that it had no soymilk-like odor and was delicious.

### Example 3

### Identification of protease

A protease-active fraction was isolated from the culture solution of Enterococcus faecalis TN-9 by a known enzyme isolation method and subjected to electrophoresis by SDS PAGE, and the protease fraction was transferred onto a PVDF film, and the amino acid sequence thereof was analyzed by using a protein sequencer. The results showed that the sequence of the 10 residues at the N-terminal was VGSEVTLKNS, which was completely identical with the internal sequence of Enterococcus faecalis gelatinase. The protease of Enterococcus faecalis TN-9 was identified as a gelatinase, based on the results.

### Example 4

### Preparation of cheese by using crude enzyme

Crude protease was prepared from the culture solution of Enterococcus faecalis TN-9 by a known enzyme isolation method. The crude enzyme was added to soymilk in an amount of 2 vol% and a cheese-like food was prepared in a manner similar to Example 2, to give a cheese-like food having physical properties and taste similar to those of the food prepared in Example 2, although sour taste due to lactic acid fermentation was not obtained.

### Example 5

### Preparation of baked cheese cake-like soymilk cake

An Enterococcus faecalis. TN-9 culture solution was prepared by culturing the strain in a lactobacilli MRS broth (manufactured by Difco) at 30°C for 14 hours. 30 ml of the culture solution was inoculated into 1000 ml of a commercially available non-modified soymilk dispensed in an autoclave-disinfected glass bottle, and the mixture was cultured stationally at 30°C for 18 hours, allowing solidification of the soymilk. The solidified soymilk was heated in hot water at 50°C for 30 minutes and filtered through a sterilized bleached cloth, to give approximately 450 g of a solidified curd solid matter (water content: 80%). 40 g of sour cream, 90 g of granulated sugar, 4/1 of lemon peel, 2 tbsp of lemon juice, 20 g of cone starch and a pinch of salt were added to 200 g of the curd solid matter obtained (cheese-like food); the mixture was agitated and mixed thoroughly; and the mixture obtained was poured into a tart pan (biscuit) and baked in an oven at 180°C for 30 minutes. The baked cake was cooled to room temperature and tasted.
The tasting was performed by five males and four females. Nine out of nine examiners evaluated that the cake had no bean-like odor and was delicious. In this way, the cheese-like food obtained by fermentation with Enterococcus faecalis TN-9 was found to be also usable as an alternative foodstuff to cheese.

### Industrial Applicability

It is possible by the production method according to the present invention to produce a cheese-like food in simple steps of fermentation, heating and filtration in a shortened period of time without use of special soymilk or without long-term aging by molding, and the cheese-like food obtained provides a new foodstuff, as well as safe and assured cakes and cuisines, for those who show allergic symptoms to dairy products and thus cannot eat these foods, thereby enriching their dietary life.

| | | |
|---|---|---|
| 0-1 | Form PCT/RO/134 (SAFE) | |
| 0-1-1 | The indications (PCT Rule 13bis) relateing to the deposited microorganism or other biological material were made by the right. | JPO-PAS 0341 |
| 0-2 | International Application Number | |
| 0-3 | Docket Number of Applicant or Agent | FP2917PCT |
| | | |
| 1 | The indications made below relate to the | |
| 1-1 | microorganism or other biological material refereed to in the description. Paragraph Number | 0013 |
| 1-3 | Indication of Deposit | |
| 1-3-1 | Nave of Depository Institution | IPOD National Institute of Advanced Industrial Science and Technology, International Patent Organism Depositary (IPOD) |
| 1-3-2 | Address of Depository Institution | 305-8566, Tsukuba Central 6, 1-1-1 Higashi, Tsukuba, Ibaraki, Japan |
| 1-3-3 | Date of Deposit | April 24, 2007 |
| 1-3-4 | Accession Number | IPOD FERM BP-10838 |
| 1-5 | Designated States for which Indications are made | All the designated states |

| For Receiving Office Use only | | |
|---|---|---|
| 0-4 | This sheet was received with the international application. (Yes/No) | |
| 0-4-1 | Authorized Officer | |

| For International Bureau use only | | |
|---|---|---|
| 0-5 | The date on which this sheet was received by the International Bureau | |
| 0-5-1 | Authorized Officer | |

## Claims

1. A method of producing a cheese-like food, comprising the steps of preparing a curd by fermenting soymilk with a lactic bacterium having protease activity, heating the curd, and filtering the curd.

2. The production method according to Claim 1, wherein the protease is gelatinase.

3. The production method according to Claim 1 or 2, wherein the lactic bacterium is an Enterococcus faecalis.

4. The production method according to any one of Claims 1 to 3, wherein the lactic bacterium is Enterococcus faecalis TN-9 (TERM BP-10838) or a mutant strain thereof.

5. A clleese-like food, obtainable by the production method according to any one of Claims 1 to 4.

6. Lactic bacterium Enterococcus faecalis TN-9 (FERM BP-10838).
